Europäisches Patentamt

European Patent Office

Office européen des brevets

(19)

(11) Publication number: **0 134 036**
A2

# EUROPEAN PATENT APPLICATION

(12)

(21) Application number: **84109871.8**

(22) Date of filing: **20.08.84**

(51) Int. Cl.⁴: **B 62 D 5/08**, B 62 D 13/00

(30) Priority: **25.08.83 US 526340**

(43) Date of publication of application: **13.03.85**
**Bulletin 85/11**

(84) Designated Contracting States: **AT BE CH DE FR GB IT LI LU NL SE**

(71) Applicant: **Dufrene, Clement Oliver, 6352-70th Street South, Cottage Grove Minnesota 55016 (US)**
Applicant: **Rosenmeier, Gordon, 72 Broadway, Little Falls Minnesota 56345 (US)**

(72) Inventor: **Dufrene, Clement Oliver, 6352 - 70th Street South, Cottage Grove Minnesota 55016 (US)**

(74) Representative: **Howden, Christopher Andrew et al, FORRESTER & BOEHMERT Widenmayerstrasse 4/I, D-8000 München 22 (DE)**

(54) A control valve apparatus for fluid actuated systems.

(57) A control valve apparatus, for fluid actuated systems comprises a housing having supply passage means for supplying source fluid and action passage means for supplying a work-performing fluid: an adjustable valve assembly within said housing at a location between said supply passage means and said action passage means, said valve assembly comprising a pair of cooperating valve members individually rotatable about a common axis, one said valve member being a driver member and the other a follower member: means for effecting rotation of said driver member independently of said follower member to move the valve members out of a neutral position, in which no through passages are formed between said supply passage means and said action passage means, to a position in which fluid passage is formed through said valve assembly, and reactive damming means fed by a metered portion of fluid passing through said valve assembly for effecting subsequent followup rotation by said follower member, thereby to reform said neutral position after termination of said driver member rotation.

*- 1 -*

"A control valve apparatus for fluid actuated systems"

This invention relates to a control valve apparatus for fluid actuated systems, and more particularly to such control valve apparatus that is simple in structure but nevertheless functionally effective for steering vehicle wheels.

The invention also relates to a steering system employing such a control valve apparatus.

The art of control valves is replete with complex apparatus having a multitude of elements necessary for effective functioning thereof. Some power steering systems have required control valves equipped with gerotor or similar orbiting arrangements of complex and expensively machined character. Nothing is known which compares to the simplicity and effectiveness of the teachings of this invention.

In one aspect, the present invention provides a control valve apparatus for fluid actuated systems, which apparatus comprises a housing having supply passage means for supplying source fluid and action passage means for supplying a work-performing fluid; an adjustable valve assembly within said housing at a location between said supply passage means and said action passage means, said valve assembly comprising a pair of cooperating valve members individually rotatable about a common axis, one said valve member being a driver member and the other a follower member; means for effecting rotation of said driver member independently of said follower member to move the valve members out of a neutral position, in which no through passages are formed between said supply passage means and said action passage means, to a position in which fluid passage is formed through said valve assembly, and reactive damming means fed by a metered portion of fluid passing through said valve assembly for effecting subsequent followup

0134036

rotation by said follower member, thereby to reform said neutral position after termination of said driver member rotation.

In a further aspect, the invention provides a steering system for controlling the steerable wheels of a vehicle, which system comprises such a control valve apparatus, mechanical means for moving the steerable wheels, fluid-powered means for moving said mechanical means, and means for conducting fluid from the action passage means of said control valve apparatus to said fluid-powered means.

Suitable systems for steering vehicle wheels comprise a fluid control valve, turnable mechanical means for mounting wheels thereon to provide steerability for the wheels, fluidpowered means for turning the mechanical means, and conduit means for conducting action fluid from the control valve to the aforenoted fluid-powered means for turning the mechanical means to effect steering. Preferably the turnable mechanical means comprises a turntable assembly. Further, where the turnable mechanical means is mounted on a trailer to provide steering capability for trailer wheels, the invention contemplates a means for locking the turnable mechanical means in a non-turnable condition for maintaining the wheels mounted thereon in a straight tracking alignment.

To inhibit or prevent theft of vehicles equipped with a steering system of the invention, a disabling means may be provided. One preferred disabling means comprises a disabling valve lockable in a closed condition to block flow of fluid into fluid-powered means such as hydraulic cylinder.

In a further aspect, the invention provides a trailer having at least one set of steerable wheels, which trailer comprises a steering system as described above, in which said control valve apparatus is mounted on said trailer, and wherein said means for effecting rotation of said drive member of said control valve apparatus comprises means actuated automatically in response to a turning movement of a vehicle towing the trailer to cause a turning movement of the steerable wheels of the trailer in an opposite direction to the direction of turning movement of said towing vehicle.

The invention has been found to be particularly useful for steering

3

0134036

the wheels of trailers or other towed wheeled vehicles, although the principles of the invention may also be applied in systems for steering the front or rear wheels of self-propelled vehicles including trucks, tractors, and the like.

Major benefits of the invention will become evident as larger and larger trucks and trailers are placed in service and encounter difficulties in making turns within confined areas and in reversing for loading and unloading.

In order that the invention may be more readily understood and so that further features thereof may be appreciated, an embodiment of the invention will now be described, by way of example, with reference to the accompanying drawings, in which:

FIGURE 1 is a schematic cross-sectional view of a control valve apparatus embodying the invention, with three interfaces of the structure labeled X, Y and Z;

FIGURES 2, 3 and 4 are schematic perspective views of the structural features at the respective interfaces X, Y and Z of Figure 1, with each interface partially opened (as shown, some features of the interfacial surfaces are imperfect in registration);

FIGURE 5 is a schematic representation taken along the X interface of Figure 1, looking upwardly from that interface, and illustrating only the passage or port relationships and features of the adjustable valve assembly members of the control valve apparatus;

FIGURE 6 is a schematic cross-section through a tractor-trailer assembly embodying a steering system of the invention;

FIGURE 7 is a schematic view of the underside of the tractor-trailer assembly illustrated in Figure 6, with parts broken away;

FIGURE 8 is a schematic perspective view of a disabling lock arrangement at the end of a hydraulic cylinder, with parts broken away

0134036

or omitted for clarity of those shown;

FIGURE 9 is a schematic representation of a steering system and the hydraulic circuit suitable for use with the tractor-trailer of Figure 6; and

FIGURE 10 is a schematic representation of a switch system suitable for the system of Figure 9.

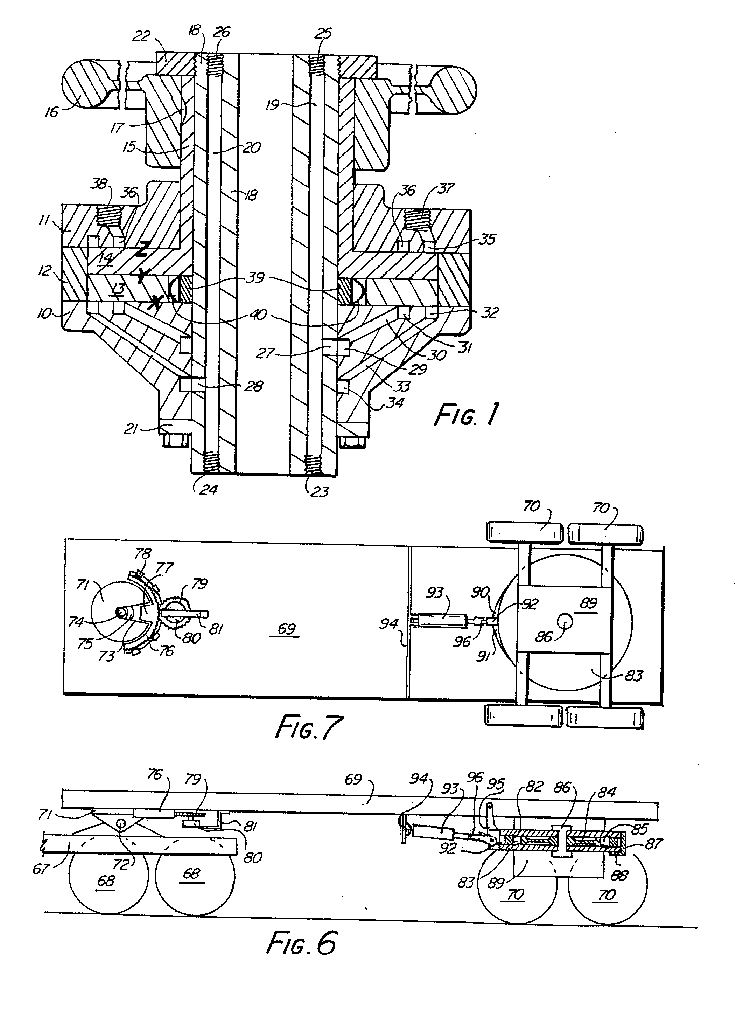

Referring to Figures 1 to 5, a control valve apparatus embodying the invention comprises a base housing 10, a cap or upper housing 11, and a retaining ring or peripheral housing 12. An adjustable valve assembly comprising two valve members, a follower or driven valve member 13 and a driver valve member 14 is provided within the housing. A driver extension in the form of an annular sleeve 15 extends outwardly from the housing, through an opening in the upper housing 11, and a steering handle or directional control means 16 is provided for rotating the driver 14. A key 17 locks the directional control means 16 to the driver sleeve 15.

An annular sleeve 18 is provided centrally within the valve apparatus, and as best seen in Figure 1, two diametrically opposed longitudinal passages 19, 20 are disposed within the wall of the sleeve 18. The passage 19 is a supply passage for receiving fluid from an external source, such as a hydraulic pump, and the passage 20 is a return passage for returning fluid to a reservoir (not shown) associated with the external pump. An assembly flange 21, in the nature of an ear, extends outwardly from the sleeve 18, and is conveniently used to fix the sleeve 18 to the base housing 10. The flange 21 may conveniently be fixed to the housing using bolts. An assembly retaining ring 22 is provided at the top end of the sleeve 18 to retain the elements of the valve apparatus in a snug relationship. Conveniently, the ring 22 is screw threaded to cooperate with a corresponding threaded portion of the sleeve 18.

Any suitable conduit may be used to connect the fluid source to a lower threaded port 23 of the supply passage 19, the upper port 25 of the passage 19 being suitably plugged. A lower threaded port 24 of the return passage 20 is likewise provided with a suitable conduit to condut spent fluid exiting passage 20 to a fluid reservoir. Again, the upper port 26 of the passage 20 is plugged. Details of the hydraulic conduits, pumps, and reservoirs are omitted inasmuch as they may be of well known types.

Incoming supply fluid in passage 19 moves through a supply port 27 in the wall of sleeve 18; and return or spent fluid enters passage 20 through a return port 28 in the wall of sleeve 18.

Fluid supplied to the supply passage 19 passes from the port 27 to an annular receiving supply passage 29, then through a radial linking supply passage 30, into an annular valve facing supply groove or passage 31, which is open to the interface between the base housing 10 and the follower valve member 13, designated the X interface. Return or spent fluid exiting the follower valve member 13 passes into an annular return passage 32, which is in the nature of a groove in the upper surface of the base housing 10, and through a radial linking passage 33 (much in the nature of a spider array) into an annular return exit passage 34 and exits the apparatus via return port 28 and passage 20.

The cap or upper housing 11 carries two annular action-fluid passages 35 and 36, both formed as grooves in the surface of the upper housing 11 that faces the valve member 14. As will be explained the passages 35, 36 are arranged for varied and selective communication with passages in the driver valve member 14. The annular passages 35 and 36 are shown in a coaxial relationship, each communicating with an exit port 37, 38 respectively. The exit ports 37 and 38 are threaded to receive hydraulic conduit means (not shown). Fluid exiting or entering the ports 37 and 38 is termed the action fluid; and the ports 37 and 38 together with their communicating annular passages are termed the action passage means for passing fluid to and from a work-performing station.

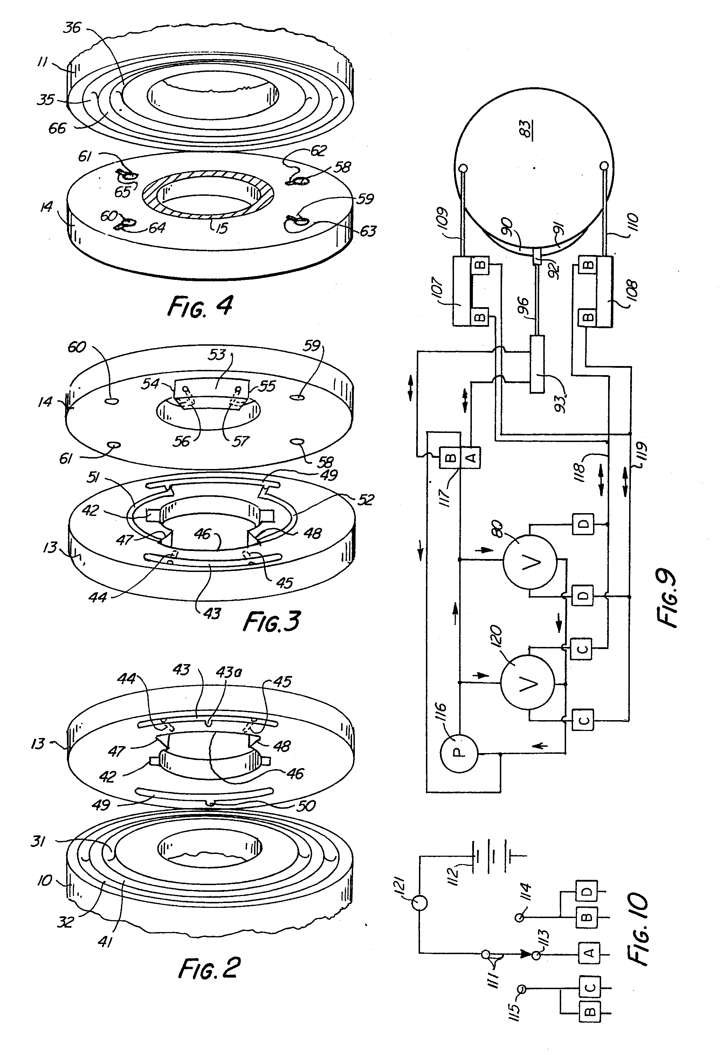

Means is also provided for imparting some resistance to the movement of the follower or driven valve member 13. As illustrated in Figure 1 such resistance means comprises resistance blocks or brake blocks 39 arranged to press against the outer surface of the central sleeve 18 by means of a leaf spring 40. The follower or driven valve member 13 has diametrically opposed radial recessses 42 therein for accommodating the resistance

0134036

blocks 39 and springs 40 (see Figure 2).

As shown in Figure 2, a land surface 41 is formed between the passages 31 and 32 at the X interface.

An arcuate inlet passage 43 extends entirely through the follower 13 and rests in mating relationship over the land area 41 of the base housing 10. However, the arcuate recess 43 is maintained in constant communication with the supply passage 31 of the housing _via_ a grooved extension 43a that extends radially inward from the arcuate passage 43 at the level of the X interface. Metering passages 44 and 45, for purposes to be hereafter explained, extend from the arcuate inlet 43 (preferably through the wall thickness of follower 13) to a cavity. The cavity which serves as part of a damming means is defined by an arcuate side wall 46 and end walls 47 and 48. The innermost side wall of the cavity is effectively formed by the central sleeve member 18 (not shown in Figure 2). Under certain conditions the cavity acts, to a degree, as a fluid dam. This damming of fluid causes a reactive result, and thus the cavity is characterized as a reactive damming cavity.

An arcuate outlet passage 49 extends entirely through the follower 13. The X interface opening of the passage 49 rests upon the land area 41 of the base housing 10, but is maintained in constant communication with the annular return passage 32 in the surface of the base housing 10 _via_ a groove 50 into the surface of follower 13 facing the base housing 10.

As shown in Figure 3, the follower 13 is equipped at its surface facing the driver 14, designated the Y interface, with equalization passages 51 and 52, both formed as grooves in the upper surface of the follower 13, i.e. at the Y interface. The passage 51 extends from the end wall 47 of the damming cavity to the arcuate outlet passage 49 and the passage 52 extends from the outlet passage 49 to the other end 48 of the damming cavity. In essence, therefore, the grooves 51 and 52 permit shift of fluid in either direction therethrough for reasons which will hereafter become evident. Other elements of the follower member 13 shown in Figure 3 are as discussed in connection with Figure 2.

0134036

The driver 14 is equipped with a metering block or damming block 53 that is arranged to project into the damming cavity formed in the member 13 by walls 46, 47 and 48. End walls 54 and 55 of the block 53 are not spaced as far apart as the end walls 47 and 48 of the damming cavity and thus the block 53 does not fully occupy the cavity. Since in a preferred embodiment, employing disc-shaped valve members, the side wall 46 of the damming cavity is arcuate, the metering or damming block 53 is likewise provided with a mating arcuate surface 53. Extending through the metering block are L-shaped metering passages 56 and 57. The metering passages 56, 57 empty to opposite end walls of the block 53. Four action ports 58, 59, 60 and 61 extend through the driver 14. In the preferred embodiment, none of these action passages is in communication with any passage of the follower 13 at the Y interface when the valve members 13 and 14 are in their normal or neutral condition. In the neutral condition no passages extend continuously through the pair of valve members 13 and 14 for the flow of fluid therethrough.

The interface between the valve member 14 and the upper housing 11 as shown in Figure 4, is designated as the Z interface. An annular land area 66 is formed in the upper housing 11, between the annular grooved action passages 35 and 36 at the Z interface. Although the action ports or passages 58, 59, 60 and 61 in the driver member 14 need not extend completely through the member onto that land area 66, they do so extend in the illustrated embodiment. It is important to recognise that constant communication between the respective action ports 58 and 59 and the upper housing annular groove 36 is provided by means of grooves 62 and 63 in the upper surface of driver member 14 that extend radially inwardly from the respective parts 58, 59. Further, the action ports 60 and 61 extending through driver 14 are provided at the upper surface of driver 14 with grooves 64 and 65 that extend radially outwardly for constant communication with the annular action passage 35 of the upper housing 11.

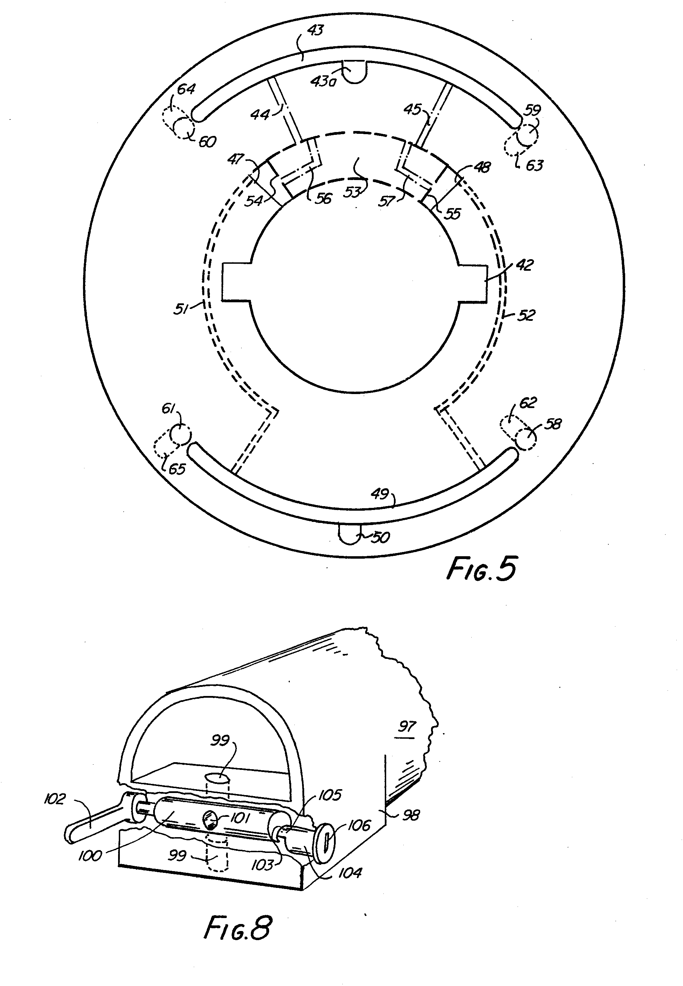

Figure 5 illustrates, by superimposition the relationship of the several passages and ports or communication channels in the valve members 13 and 14.

In Figure 5, the solid lines outline elements of the follower valve member (the lower valve member) that are visable at the X interface; short dash lines outline elements of the follower valve member located at the Y interface; long dash lines with a dot between the dashes outline metering passages located between the interfaces X and Y for both the follower valve member and the driver (the upper) valve member; long dash lines outline elements of the driver visable at the X interface; dashes with two dots between each dash outline elements of the driver as visible at the Y interface and lines composed of all dots (i.e., extremely tiny dashes) outline elements of the driver at the Z interface.

When the valve elements are in the neutral condition, pressurized hydraulic fluid from a suitable source is retained under pressure within the arcuate inlet cavity 43 of the follower as a result of entering that cavity by way of the groove 43a communicating with annular supply passage 31. But the fluid under pressure in the arcuate passage 43 remains there inasmuch as the passage 43 is oriented between action ports 59 and 60 of the driver; and the metering passages 44 and 45 are blocked at their outlet by the block 53 which is in spaced relationship from the end walls 47 and 48 of the damming cavity. Further, the arcuate outlet passage 49, while in constant communication with the annular outlet groove 32 in the upper face of the base housing 11, via the grooved channel 50, is not in communication with either action port 61 or 62 of the driver. However, the driver may be rotated in either direction with respect to the follower member (by operation of the control means 16 (Figure 1)).

Continuing with Figure 5, assuming that the driver member 14 is rotated in a clockwise direction (as Figure 5 is viewed) the action port 60 will be place in communication with the supply inlet passage 43 of the follower and will permit flow of fluid therethrough to the groove 64 and thus through the passage 35 to the action outlet port 37 of the housing 11 to a work-perfoming station (not shown). Further action port 58 will be placed in communication with the arcuate return passage 49 of the follower 13 to permit fluid returning through the upper housing port 38 from the work-performing station to pass through action port 58 into arcuate return passage 49 and through the communicating groove 50 into the annular return passage 32, ultimately returning the fluid to a reservoir for recycling. Simultaneously, turning of the driver member 14 in a clockwise direction

0134036

as viewed in Figure 5 also causes the metering block 53, which is fixed to the member 14 to be shifted clockwise to permit metering flow of fluid from the pressurized inlet arcuate passage 43 of the follower onward through metering passage 45 [of the follower] and then through metering passage 57 [of the metering block of the driver] into the space between the end wall 55 of the metering block 53 and the end wall 48 of the damming cavity. While some of the fluid entering that space will bleed off through the equalization channel 52, a sufficient buildup of pressurized fluid from the supply source will ultimately cause the follower valve member 13 to rotate in the same clockwise direction and to the same extent as that earlier made by the driver. The result will be that the buildup of fluid will force the valve elements to return to the neutral condition illustrated in Figure 5.

It should also be recognised that the initial clockwise rotary movement of the driver causes fluid to flow through the equalization channels 51 and 52 to a limited extent, to accommodate a shift of fluid from the normally equal spaces between the ends 54 and 55 of the metering block 53 and the end walls 47 and 48 of the damming cavity within which the metering block 53 is shiftable. In other words, on clockwise rotation, fluid passes out of the cavity between the walls 55 and 48 at the right in Figure 5, through equalization passage 52, and enters equalization passage 51 to fill the expanding space between the walls 47 and 54 on the clockwise rotation of the metering block 53.

Counterclockwise rotation of the driver effects a similar equalization through equalization passages 51 and 52. Also, on counterclockwise rotation, the space between the end walls 47 and 54 of the damming cavity receives fluid through the metering passages 44 and 56. Additionally, on counterclockwise rotation, the port 59 of the driver is placed in communication with the arcuate inlet 43 of the follower and allows flow of fluid through groove 63 into annular groove 36 and out of action port 38 to the work-performing station but in an opposite direction to that effected by clockwise rotation. Simultaneously, port 61 of the driver is placed in communication with the outlet arcuate passage 49 of the follower. Thus fluid returning from the work-performing station through the port 37 of the housing 11 passes through the passage 35 into the groove 65 and through the port 61 to the outlet passage 49 of the follower and then via passage 50 into the annular return passage 32 of the base housing 10. Again, fluid passes through the metering passages 44 and 56 into the damming cavity between the walls 47 and 54 of the member 13 causing a reactive force which moves the follower valve member in a counterclockwise direction to reform the neutral position for the relationship of the valve members 13 and 14, as illustrated in Figure 5.

It will be appreciated that the resistance brake member 39 performs the function of holding the follower against movement when the driver is moved, but does not provide a sufficient resistance to prevent hydraulic fluid from moving the driver. Further, it should be appreciated that the bulk of hydraulic fluid passes from the arcuate inlet 43 of the follower through either of the ports 59 or 60 on rotation of the driver. The metering ports 44 and 45 of the follower, as well as the metering ports or passages 56 and 57 of the driver metering block 53, are relatively small in diameter as compared to the ports 59 and 60 of the driver. Further, the equalization passages 51 and 52 are just sufficient in cross-sectional area to allow relatively easy rotational shift of the driver without extreme resistance to the flow of hydraulic fluid through those equalization channels. The equalization channels are generally smaller in cross section than the metering passages. The resistance blocks 39 give way or allow rotation of the follower under the pressure of hydraulic fluid from the damming cavity with only modest effect on the steering handle 16, thus creating a sensitivity reaction on the steering handle 16 which is of modest character but desirable from the standpoint of steering sensitivity. In this connection, it will be noted that the metering passages and reactive damming means form in essence a separate network in the pair of valve members apart from the network of flow for the work-performing fluid from a pressurized source through the valve members.

Considerable variation from the exact physical structures and arrangements illustrated in Figures 1 to 5 may be made without departing from the essential scope and spirit of the invention. For example, the driver ports 58, 59, 60 and 61 may be triangular in cross section with an apex of the triangle pointed toward the passages 43 and 49 of the follower which themselves may terminate in a triangular apex; such structural features enhance the regulation of minute flow at initial and terminal adjustment

0134036

of the valve assembly members out of and into neutral relationships. The housing may be formed to receive conical valve members, or even sleeve valve members, with sleeve shapes for the base and cap housing. Passages through the base housing 10 may be reduced in character to the point of resembling those through the illustrated cap housing 11. The location of structural and functional features on the pair of valve members 13, 14 may be reversed, the valve members may be reversed, and even the conduit connections reversed so as to connect source fluid at the illustrated action ports and action fluid at the illustrated source fluid passages. The illustration of the Figures omits O-ring seals, but such seals as well as other types of seals and even press-fitting may be employed between components in particular areas where other than modest leaks or no leaks of hydraulic fluid are desired, as will be readily appreciated by those skilled in th art.

Figures 6 and 7 illustrate an arrangement of elements for the purpose of automatically steering trailer wheels equipped with a turntable mechanism for steering.

Figure 6 shows a platform portion 67 of a tractor or towing vehicle, supported by rear tractor wheels 68, and a semi-trailer bed 69 that is supported by rear wheels 70. A swivel disc 71 is fixed on the platform 67 to be pivotable on a lateral axis 72 to enable the upper surface of the swivel disc 71 to remain in the same plane as the trailer bed 69 even when the tractor hauls the trailer up and down hills. As best seen in Figure 7, the swivel disc 71 is equipped with a slot 73 extending inwardly from its periphery that cooperates with a post 74, that projects downwardly from an undersurface of the trailer bed 69, to achieve coupling of the tractor to the trailer. In a typical coupling operation, the tractor is reversed towards a parked trailer to move the swivel disc 71 underneath the bed 69 of the trailer. The post 74 passes through the slot 73 of the swivel disc 71 which is then locked to the post 74 by a mechanism 75 on the tractor. The post 74 of the trailer bed 69 is locked substantially at the centre or rotary axis of the swivel disc 71 of the tractor.

An arced gear 76, illustrated only schematically in Figures 6 and 7, has teeth on its outer periphery and a locking lug 77 extending radially inwards from a medial location at its inner periphery. The arced gear 76

0134036

with its locking lug 77 is mounted for arced movement on the underside of the trailer bed 69. Retaining brackets 78 of any suitable character are employed to hold this arced gear 76 on the underside of the trailer bed 69. For example, the L- shaped retaining brackets 78 may suitably be fixed on the underside of the trailer bed 69 to extend downwardly and underneath a retaining ring at the upper surface of the arced gear 76. Any suitable retaining bracket members and cooperative tracking on the arced gear may be employed to hold the arced gear 76 on the underside of the trailer bed so as to permit the arced gear 76 to move arcuately. The arcuate movement is effected as a result of rotation of the disc 71 [relative to trailer 69] such as when the tractor towing the trailer bed 69 turns a corner. The rotational shifts of the disc 71 are transmitted to the arced gear through the lug 77 which is positioned to lie within the slot 73 of the disc 71.

Also mounted on the underside of the trailer bed is a toothed gear 79 that suitably has teeth about its entire periphery. The toothed gear 79 is mounted on an axial shaft which also mounts a valve 80, specifically a control valve apparatus as hereinabove described. More specifically, the axial shaft of gear 79 is so fixed to the driver extension 15 of the valve apparatus as to effect rotation of the driver extension 15 upon rotational movement in either direction of the gear 79. The control valve apparatus 80 is fixed to the underside of the trailer bed 69 by means of any suitable bracket 81.

All hydraulic lines as well as the steering hydraulic mechanisms are omitted from Figures 6 and 7 in order to permit greater clarity. The hydraulic lines and the steering hydraulic means or cylinders are shown schematically in Figure 10. At this point it is sufficient to recognize that change of direction of the towing vehicle, as by turning a corner will effectively cause rotation of the gear 79 and therefore of the driver extension 15 of the valve 80.

As shown in the right-hand portions of Figures 6 and 7, the wheels 70 of the trailer 69 are mounted on a turntable asssembly to facilitate steerage of the trailer. Means are provided for locking the turntable assembly and thus the trailer wheels 70 against turnability or for straight tracking as will be described. The turntable assembly comprises a rigid upper turntable plate 82, a lower turntable plate 83, and an intermediate roller bearing holder or retainer 84 carrying tapered roller bearings 85 between the upper turntable plate 82 and lower turntable 83. An axis pin 86 extends through the upper turntable plate 82, the roller bearing holder 84 (e.g., a spider wheel) and through the lower turntable plate 83. A retainer band 87, which also serves somewhat as a dust shield, is provided about the rear portion of the turntable assembly. The band 87 supports lower inwardly extending flange retainer plates 88. Flange plates 88 are suitably spaced in a circumferential arrangement and are omitted from the lead or front portion of the turntable assembly where the lower turntable plate 83 must be exposed for reasons which will hereinafter be evident. Any suitable means are employed as an anchoring or mounting means 89 for fixing tandem rear wheels 70 as a unit to the lower turntable plate 83 to permit turning of the entire tandem wheel assembly about the vertical axis pin 86. Similarly, any suitable means may be employed to mount the upper turntable plate 82 fixedly to the underside of the trailer bed 69.

Referring now particularly to Figure 7, each turntable plate 82 and 83 is equipped, at the front or lead edges thereof, with an outwardly projecting pair of locking cam members 90 and 91. When the pair of locking cam members 90 and 91 of the lower turntable plate 83 are oriented directly below the corresponding pair of locking cam members on the upper turntable plate 82, a cam locking lug 92, operated by a hydraulic cylinder 93, may be rammed into the space between the respective locking cam members 90 and 91 of the upper and lower turntable plates 82, 83 to fixedly maintain the tandem wheels 70 in a straight tracking alignment that is suitable for highway travel. The hydraulic cylinder 93 is mounted at its inactive end on any suitable member 94 carried by the trailer 69. The ram 96 of the hydraulic cylinder 93 is suitably carried by a swivel mounting 95 for the cam locking lug 92. Retraction of the ram 96 withdraws the lug 92 and allows steering rotation of the lower turntable 83.

Figure 8 illustrates one suitable means for locking a fluid-powered means or work-performing hydraulic member (such as a hydraulic cylinder) into a disabled condition, that is, a condition which can be highly discouraging to theft of trailers or tractors equipped with such hydraulic members. At one end of a hydraulic cylinder 97 an extension housing 98 may be mounted or made substantially integral with the body of the hydraulic cylinder 97.

14

0134036

An action fluid passage 99 leading into that end of the hydraulic cylinder may have interposed in its line of feed a lockable rotatable valve member 100, with a port 101 therethrough. .A handle 102 may be employed to rotate the valve 100 about 90 degrees from the position illustrated to permit the flow of hydraulic fluid through the valve 100 and passage 99, or to place the valve 100 in the position illustrated in Figure 8 in which flow is prevented. The cylinder of the rotatable valve 100 is provided at one end with a crescent cutout 103 extending radially inward into its body. A lock cylinder 104, equipped at its end with a mating crescent lock member 105, may be rotated as by a key through a key slot 106 to occupy the crescent cutout 103 and to hold the valve cylinder 100 in the position illustrated in Figure 8, thereby blocking entrance or exit of fluid through the passage 99 and effectively disabling operation of the hydraulic cylinder. Steerable wheels equipped with such a hydraulic cylinder disabling system may be placed in a turned condition and the hydraulic cylinder disabled as illustrated, with the result that theft of the vehicle so equipped is highly discouraged.

In Figure 9, which illustrates schematically a suitable hydraulic control circuit for the hydraulic steerage assembly discussed in relation to Figures 6 and 7. Common elements are given the reference numerals allocated in the earlier Figures. Two hydraulic cylinders 107 and 108 are provided for turning the turntable plate 83. The hydraulic cylinders are mounted underneath the trailer bed 69. The hydraulic cylinders 107, 108 have ram members 109 and 110 oriented in parallel and fixed by pivot mounting to diametrically opposite sides of the lower turntable plate 83. A hydraulic pump 116 pumps fluid via hydraulic conduit lines in the direction illustrated by arrows, with return fluid suitably passing to a reservoir (not shown) for recycling. A bi-directional or double acting solenoid-operated valve 117 is interposed in the pump line feeding fluid to the hydraulic cylinder 93, which operates the cam locking lug 92 for holding the lower turntable 83 against turning movement. Hydraulic lines 118 and 119 connect the gear-operated control valve apparatus 80 and a manual-operated control valve 120, that also embodies the invention, with the hydraulic cylinders 107 and 108 to supply working fluid for selectively effecting rotation of the lower turntable plate 83 in either direction and thus to achieve steering of the wheels 70 carried by turntable plate 83.

0134036

Referring also to Figure 10, a switch 111 is connected to a positive battery source 112 and is shiftable between switch contacts 113, 114 and 115. A master switch schematically illustrated at 121 is provided in the circuit for terminating flow of current for example when the trailer is parked. When the switch 111 is positioned for the flow of current through contact 113, as shown in Figure 10, a solenoid valve, labelled A in Figures 9 and 10, is actuated. The solenoid valve A comprises a part of the bi-directional solenoid valve 117 referred to above. When that portion of solenoid valve A is actuated, hydraulic fluid from pump 116 is directed through valve 117 to flow along the hydraulic conduit connected to the back (or left) end of hydraulic cylinder 93, so as to force the piston within that hydraulic cylinder to the right and consequently to extend the ram 96 and cam locking lug 92 towards the plate 83 to lock the lower turntable 83 against movement as described above.

Where manual steering of the wheels carried by the lower turntable 83 is desired, the switch 111 is shifted to align with the contact 115, thereby actuating the solenoid valves labelled B and C in Figure 9. Specifically, the valve 117 is shifted to effect flow of hydraulic fluid from the pump 116 through the bi-directional solenoid control valve 117 the front (or right) end of the hydraulic cylinder 93, thereby causing retraction of the piston of that cylinder and pulling the lug 92 away from its locking position between the cam members 90 and 91 of the lower turntable plate 83 to permit turning movement of the lower turntable plate 83. Further, solenoid control valves labelled B in each fluid line connected with the hydraulic cylinders 107 and 108 are opened, thereby permitting those hydraulic cylinders to function to turn the lower turntable plate 83, and consequently to steer the wheels 70. Additionally, a solenoid control valve labelled C in each of the work-performing hydraulic lines from the control valve apparatus 120 is opened, with the result that the entire hydraulic system controlled by the steering valve 120 of the invention is placed in operation, with the automatically controlled valve 80 in a disabled condition. Thus, manual control of the steering of the wheels carried by the turntable plate 83 is conveniently accomplished as from the cab of a tractor.

Where automatic steering of the wheels 70 is desired, for example

0134036

in traversing narrow streets or the like, the switch 111 is shifted to connect with the contact 114 to actuate the solenoid controlled valves labelled B and D in Figure 9. The only difference effected by this positioning of the switch 111, as compared to that described for position 115, is to disable or close the solenoid valves C and to open the solenoid control valves D. This arrangement permits the automatically turned control valve apparatus 80 to control the flow of hydraulic fluid to the turntable-actuating hydraulic cylinders 107 and 108, whilst disabling the control valve apparatus 120.

The central sleeve 18 of a control valve apparatus of the invention may advantageously be adapted to permit mounting of that apparatus at a location about an existing steering column of a self-propelled vehicle for the purpose of steering front wheels or rear wheels of the self-propelled vehicle, or for steering trailer wheels.

Specific hydraulic conduit connection between action ports of the control valve apparatus and the hydraulic fluid-powered means to effect during turning steering movement may be adjusted so that the desired response of movement by steerable wheels is accomplished, as will be evident to those skilled in the art.

The features disclosed in the foregoing description, in the following claims and/or in the accompanying drawings may, both separately and in any combination thereof, be material for realising the invention in diverse forms thereof.

0134036

## CLAIMS

1.     A control valve apparatus for fluid actuated systems, which apparatus comprises a housing having supply passage means for supplying source fluid and action passage means for supplying a work-performing fluid; an adjustable valve assembly within said housing at a location between said base passage means and said action passage means, said valve assembly comprising a pair of cooperating valve members individually rotatable about a common axis, one said valve member being a driver member and the other a follower member; means for effecting rotation of said driver member independently of said follower member to move the valve members out of a neutral position, in which no through passages are formed between said supply passage means and said action passage means, to a position in which fluid passage is formed through said valve assembly, and reactive damming means fed by a metered portion of fluid passing through said valve assembly for effecting subsequent followup rotation by said follower member, thereby to reform said neutral position after termination of said driver member rotation.

2.     A control valve apparatus according to Claim 1, wherein said reactive damming means comprises a cavity in one valve member of said valve assembly.

3.     A control valve apparatus according to Claim 2, wherein a block extends from the other said valve member into said cavity, said cavity being larger than said block.

4.     A control valve apparatus according to Claim 3, wherein said cavity is formed in the said follower member and said block is formed on the said driver member, and wherein said block is equipped with metering passages.

5.     A control valve apparatus according to any one of Claims 1 to 4, wherein said follower member is proximate to said supply passage means and said driver member is proximate to said action passage means.

6.     A control valve apparatus according to any one of Claims 1 to

0134036

5. wherein said cooperating valve members comprise disc-like members.

7. A steering system for controlling the steerable wheels of a vehicle, which system comprises a control valve apparatus according to any one of Claims 1 to 6, mechanical means for moving the steerable wheels, fluid-powered means for moving said mechanical means, and means for conducting fluid from the action passage means of said control valve apparatus to said fluid-powered means.

8. A system according to Claim 7, further comprising means for locking said mechanical means to prevent steering movement of the steerable wheels.

9. A trailer having at least one set of steerable wheels, which trailer comprises a steering system according to Claim 7 or 8, said control valve apparatus being mounted on said trailer, and wherein said means for effecting rotation of said drive member of said control valve apparatus comprises means actuated automatically in response to a turning movement of a vehicle towing the trailer to cause a turning of the steerable wheels of the trailer in an opposite direction to the direction of turning movement of said towing vehicle.

10. A trailer according to Claim 9, further comprising a manual control valve according to any one of Claims 1 to 6 for selectively controlling operation of said steerable wheels.

FIG. 1

FIG. 7

FIG. 6

FIG. 4

FIG. 3

FIG. 2

FIG. 9

FIG. 10

Fig.5

Fig.8